# EUROPÄISCHE PATENTSCHRIFT

(11) **EP 1 498 918 B1**
(45) Veröffentlichungstag und Bekanntmachung des Hinweises auf die Patenterteilung: **29.10.2008**
(21) Anmeldenummer: 04016053.3
(22) Anmeldetag: 08.07.2004
(51) Int. Cl.: H01F 41/02, B65G 57/03

(54) **Verfahren zum Halten von abgestapelten Blechen, insbesondere Transformatorblechen**
Method for retaining stacked sheets, in particular transformer sheets
Méthode pour retenir des tôles empilées, en particulier tôles de transformateur

(30) Priorität: 15.07.2003 DE 10332018
(43) Veröffentlichungstag der Anmeldung: 19.01.2005
(73) Patentinhaber: Heinrich Georg GmbH Maschinenfabrik, 57223 Kreuztal (DE)
(72) Erfinder: Kruse, Engelbert, 57482 Wenden (DE)
(74) Vertreter: Pürckhauer, Rolf

(56) Entgegenhaltungen:
- DE-A- 4 338 981
- PATENT ABSTRACTS OF JAPAN Bd. 0080, Nr. 54 (M-282), 10. März 1984 (1984-03-10) & JP 58 207220 A (RICOH KK), 2. Dezember 1983 (1983-12-02)
- PATENT ABSTRACTS OF JAPAN Bd. 0120, Nr. 39 (M-665), 5. Februar 1988 (1988-02-05) & JP 62 191366 A (TOSHIBA CORP), 21. August 1987 (1987-08-21)

## Beschreibung

Die Erfindung bezieht sich auf ein Verfahren zum Halten von abgestapelten Blechen, insbesondere Transformatorblechen, die von einer Vorratsrolle kontinuierlich abgerollt werden, nachfolgend auf Länge und Form geschnitten werden und jeweils mit mindestens einem Fädelloch versehen werden, wobei die Bleche in Förderrichtung nach dem Schneiden auf Paletten abgestapelt werden, und wobei oberhalb der Bleche mindestens ein Fädelbolzen vorgesehen ist, der in das Fädelloch in dem jeweiligen Blech und anschließend mit demselben in Richtung der Palette bewegbar ausgebildet ist.

Aus der DE 43 38 981 C2, der ein Verfahren gemäß Oberbegriff des Anspruchs 1 offenbart, ist eine Einrichtung zum Schichten von Platten, in denen jeweils wenigstens zwei Führungslöcher definiert sind, bekannt, die Führungseinrichtungen aufweisen, die wenigstens zwei Führungsstifte enthalten, die senkrecht zu einer an die vorgegebene Position beförderten Platte orientiert sind. Um eine Einrichtung zu schaffen, die eine präzise und zuverlässige Positionierung der einzelnen Bleche bzw. Platten zueinander ermöglicht, befinden sich die Führungsstifte oberhalb einer Fördereinrichtung beim Antransport der Platten, und die Führungseinrichtungen bewegen die Führungsstifte zusammen mit einer herabfallenden Platte, um jede der Platten separat durch die Führungsstifte einzeln auszurichten, wenn diese Platten auf der horizontalen Grundfläche geschichtet werden, und um die Führungsstifte zurückzustellen.

Die Einrichtung weist zusätzlich eine Halteeinrichtung auf, die die geschichtete Platte auf der horizontalen Grundfläche hält, wenn der Führungsstift von der aufgeschichteten Platte in seine Anfangsposition zurückgezogen wird. Da die Halteeinrichtung jedoch mit dem Führungsstift über eine Feder verbunden ist, wird die Halteeinrichtung ab einem gewissen Punkt selbstverständlich mit nach oben bewegt, da sich der Führungsstift mit der Halteeinrichtung für die nächste zu schichtende Platte oberhalb derselben befinden muß.

Dies hat jedoch den Nachteil, dass die oberste Platte lose auf einer Palette oder einem bereits aufgeschichteten Plattenstapel liegt. Da zumeist zwischen der obersten Platte und dem Plattenstapel noch ein Luftpolster vorhanden ist, das sich sehr langsam abbaut, kommt es sehr oft vor, dass die oberste Platte aus ihrer Position "wegschwimmt".

Der Erfindung liegt die Aufgabe zugrunde, ein Verfahren der angegebenen Gattung zu schaffen, mit dem die abgestapelten Bleche dauerhaft in ihrer Lage gehalten werden und ein "Wegschwimmen" des obersten abgestapelten Bleches vermieden wird.

Diese Aufgabe wird erfindungsgemäß durch ein Verfahren mit den Kennzeichnungsmerkmalen des Patentanspruchs 1 gelöst.

Zweckmäßige Weiterbildungen des erfindungsgemäßen Verfahrens sind in den Unteransprüchen gekennzeichnet.

Das erfindungsgemäße Verfahren zeichnet sich vor allem dadurch aus, daß durch die Führungspatrone das oberste Blech sowie ein Teilbereich von bereits abgestapelten Blechen über einen längeren Zeitraum gemeinsam gehalten sind, so dass genügend Zeit vorhanden ist, damit sich zwischen den Blechen vorhandene Luftpolster abbauen können und somit kein "Wegschwimmen" vor allem des obersten Bleches erfolgen kann.

Weitere Vorteile des Verfahrens ergeben sich aus der nachfolgenden Beschreibung anhand einer in den Zeichnungen dargestellten Ausführungsform einer nach dem Verfahren betriebenen Vorrichtung. Dabei zeigt
- Fig. 1: einen Längsschnitt einer nach dem Verfahren betriebenen Vorrichtung, wobei eine Hälfte mit einer Palette und die andere Hälfte mit bereits gestapelten Blechen dargestellt ist,
- Fig. 2: einen vergrößerten Ausschnitt II aus Fig. 1,
- Fig. 3: einen vergrößerten Schnitt nach der Linie III-III in Fig. 1 und die
- Fign. 4a-4f: in Längsschnittdarstellung die einzelnen Schritte beim Abstapeln eines Bleches.

Die in den Figuren dargestellte und nach dem erfindungsgemäßen Verfahren arbeitende Vorrichtung 1 zum Halten von abgestapelten Blechen 2, insbesondere Transformatorblechen, die von einer Vorratsrolle (nicht dargestellt) kontinuierlich abgerollt werden, nachfolgend auf Länge und Form geschnitten werden und jeweils mit mindestens einem Fädelloch 3 versehen werden, wird in Anlagen eingesetzt, bei der die Bleche 2 in Förderrichtung nach dem Schneiden auf Paletten 4 abgestapelt werden. Dabei ist oberhalb der Bleche , d.h. oberhalb einer Zuführeinrichtung (nicht dargestellt), in der die Bleche magnetisch oder mittels eines Vakuums gehalten sind, mindestens ein Fädelbolzen 5 vorgesehen, der in das Fädelloch 3 in dem jeweiligen Blech 2 und anschließend mit demselben in Richtung der Palette 4 bewegbar ausgebildet ist.

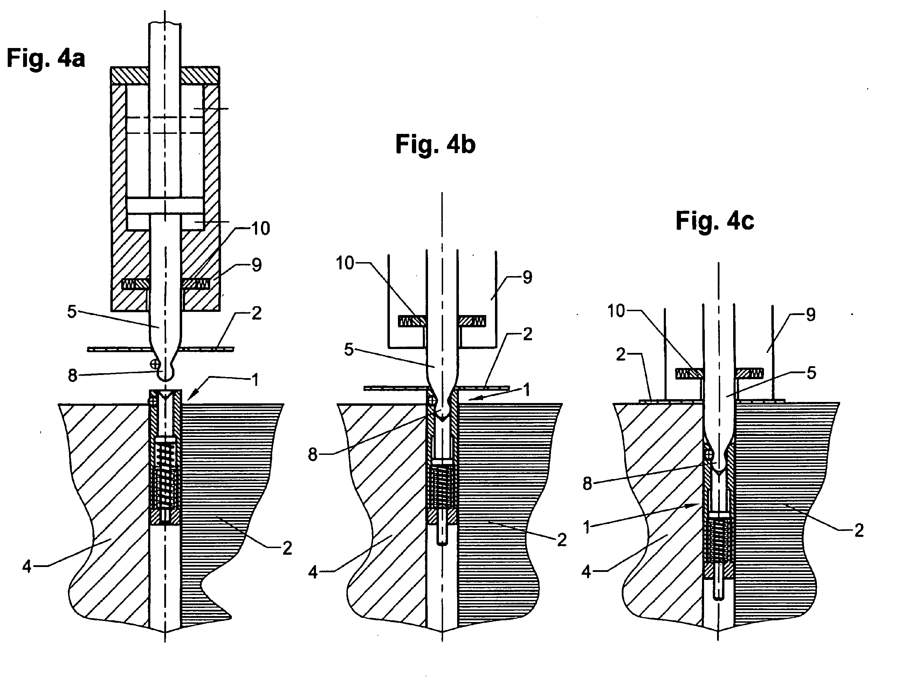

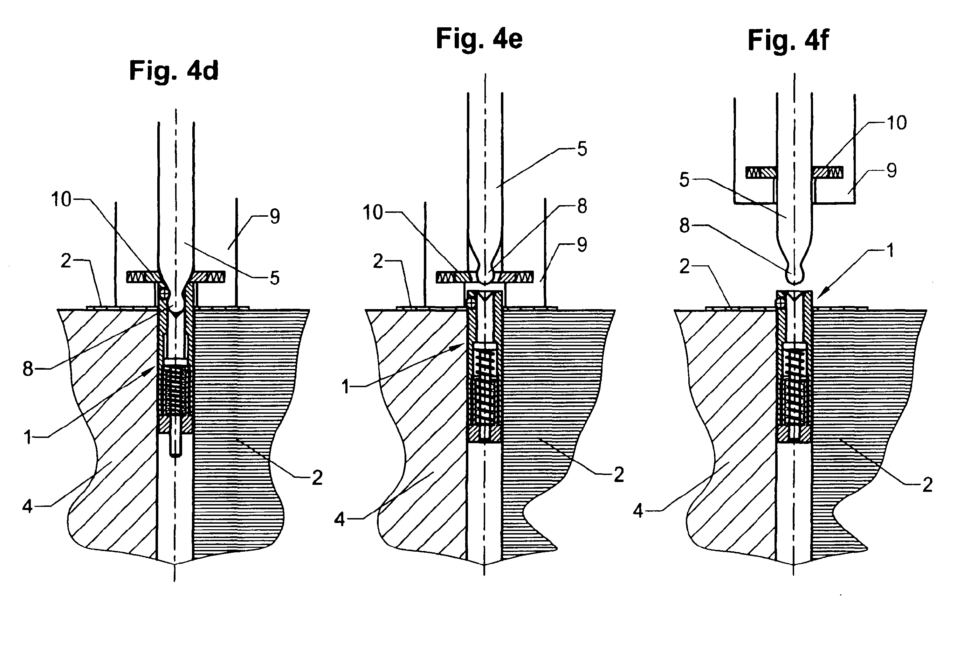

Die Vorrichtung 1 besteht aus mindestens einer Führungspatrone 6, die zunächst in eine Bohrung 7 der jeweiligen Palette 4 eingesetzt ist. In die Führungspatrone 6 greift der Fädelbolzen 5 bei seiner Abwärtsbewegung mit seiner am unteren Ende vorgesehenen Fädelspitze 8 ein (siehe Fig. 4a und 4b). Dabei bewegt der Fädelbolzen 5 die Führungspatrone 6 in der Bohrung 7 der Palette 4 bzw. bei bereits abgestapelten Blechen 2 in deren koaxial verlaufenden Fädellöchern 3 nach unten. Nach einem bestimmten Weg des Fädelbolzens 3 setzt ein den Fädelbolzen koaxial umgebender Niederhalter 9, der zugleich Wegbegrenzer für den Fädelbolzen 3 ist, auf dem zu stapelnden Blech 2 auf (siehe Fig. 4c). Bei der Aufwärtsbewegung des Fädelbolzens 5 wird die Führungspatrone 6 automatisch entkoppelt. Dazu ist in dem Niederhalter 9 ein Abstreifer 10 vorgesehen, an dem die Führungspatrone 6 bei der Aufwärtsbewegung des Fädelbolzens 5 anschlägt und den Fädelbolzen 5 und die Führungspatrone 6 entkoppelt (siehe Fig. 4d und 4e). Bis zur entgültigen Entkoppelung verweilt der Niederhalter 9 auf dem zuletzt gestapelten Blech. Erst danach bewegen sich Fädelbolzen 5 und Niederhalter 9 in ihre oberste Position (siehe Fig. 4f).

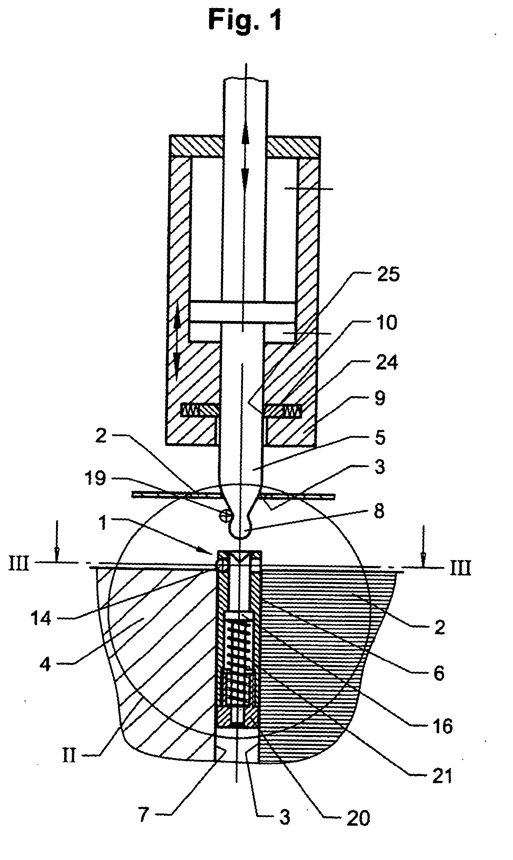

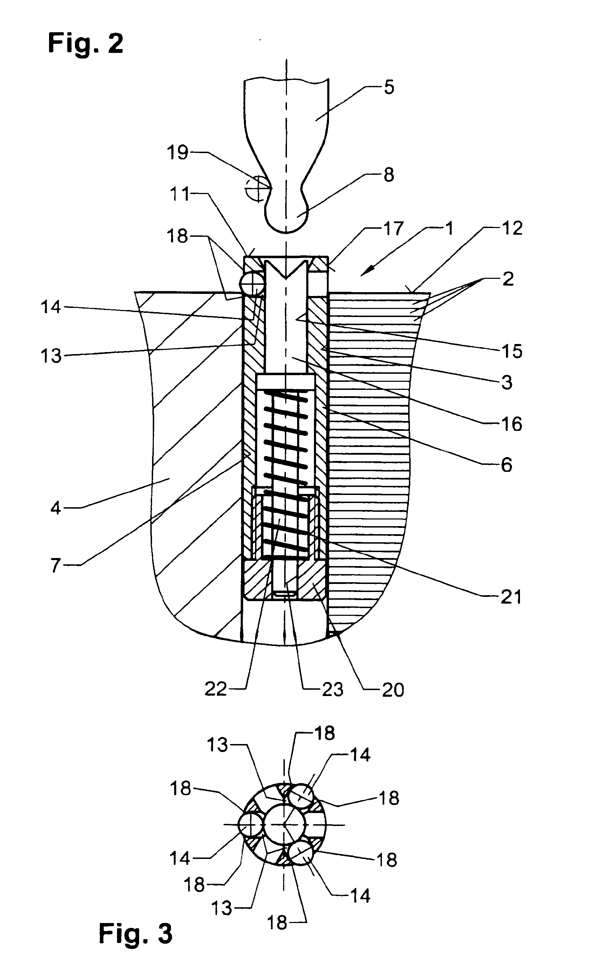

Die Führungspatrone 6 gleitet nach dem Entkoppeln in der Bohrung 7 bzw. in den Fädellöchern 3 so weit nach unten zurück, dass die Oberkante 11 der Führungspatrone 6 über die Oberseite 12 des zuletzt abgestapelten Bleches 2 übersteht. Dazu weist die Führungspatrone 6 an ihrem oberen Ende drei in radialen Bohrungen 13 bewegbare Arretierkugeln 14 auf (siehe auch Fig. 3), die in Ruhestellung von einem in einer koaxialen Bohrung 15 bewegbaren Stift 16 in ihrer äußeren Lage gehalten werden, wobei die Arretierkugeln 14 über den äußeren Umfang 17 der Führungspatrone 6 überstehen und an Schultern 18 am Ende der Bohrungen 13 gehalten sind (siehe Fign. 1, 2, 4a, 4b, 4e und 4f). Durch das Eindringen der Fädelspitze 8 in die Führungspatrone 6 und das anschließende Herunterdrücken des Stiftes 16 wird der Weg der Arretierkugeln 14 in das Innere der Führungspatrone 6 freigegeben. Dazu ist die Fädelspitze 8 am vorderen Ende kugelförmig ausgebildet, wodurch die Arretierkugeln 14 hinter den kugelförmigen Abschnitt 19 der Fädelspitze 8 eingreifen können.

Am unteren Ende der Führungspatrone 6 ist ein Einschraubstück 20 eingeschraubt, an dem sich eine Druckfeder 21 abstützt, die den Stift 16 beim Herausfahren des Fädelbolzens 5 wieder in seine obere Ruhestellung drückt und dort hält. Der Stift 16 ist mit einem abgesetzten Teilstück 22 in einer koaxialen Bohrung 23 des Einschraubstückes 20, mit dem die Vorspannkraft eingestellt werden kann, geführt.

Um eine ordnungsgemäße Entkoppelung von Fädelbolzen 5 und Führungspatrone 6 zu gewährleisten, besteht der Abstreifer 10 aus mehreren Teilstücken, die jeweils radial bewegbar sind, wobei sich die Teilstücke innen gegeneinander abstützen und nach außen durch Druckfeder 24 vorgespannt sind. Die Mittelbohrung 25 des Abstreifers 10 ist vorzugsweise konisch ausgebildet, so dass der Fädelbolzen 5 leichter in die Mittelbohrung 25 eindringen kann und die Teilstücke auseinandergedrückt werden.

## Patentansprüche

1. Verfahren zum Halten von abgestapelten Blechen, insbesondere Transformatorblechen, die von einer Vorratsrolle kontinuierlich abgerollt werden, nachfolgend auf Länge und Form geschnitten werden und jeweils mit mindestens einem Fädelloch versehen werden, wobei die Bleche in Förderrichtung nach dem Schneiden auf Paletten abgestapelt werden, und wobei oberhalb der Bleche mindestens ein Fädelbolzen vorgesehen ist, der in das Fädelloch in dem jeweiligen Blech und anschließend mit demselben in Richtung der Palette bewegbar ausgebildet ist, **dadurch gekennzeichnet, dass** mindestens eine Führungspatrone (6) vor Beginn des Abstapelns in eine Bohrung (7) der jeweiligen Palette (4) eingesetzt ist, in die der Fädelbolzen (5) bei der Abwärtsbewegung desselben mit seiner am unteren Ende vorgesehenen Fädelspitze (8) eingreift, wobei der Fädelbolzen (5) die Führungspatrone (6) in der Bohrung (7) der Palette (4) bzw. in den Fädellöchern (3) bereits abgestapelter Bleche (2) nach unten bewegt und der Fädelbolzen (5) bei der Aufwärtsbewegung die Führungspatrone (6) automatisch entkoppelt wird, wenn die Oberkante (11) der Führungspatrone (6) über die Oberseite (12) des zuletzt abgestapelten Bleches (2) übersteht.

2. Verfahren nach Anspruch 1, **dadurch gekennzeichnet, dass** drei in radialen Bohrungen (13) bewegbare Arretierkugeln (14) am oberen Ende der Führungspatrone (6) in Ruhestellung von einem in einer koaxialen Bohrung (15) bewegbaren Stift (16) in ihrer äußeren Lage gehalten werden, wobei die Arretierkugeln (14) über den äußeren Umfang (17) der Führungspatrone (6) überstehen und an Schultern (18) am Ende der Bohrungen (13) gehalten werden.

3. Verfahren nach Anspruch 1 oder 2, **dadurch gekennzeichnet, dass** sich an einem am unteren Ende der Führungspatrone (6) eingeschraubten Einschraubstück (20) eine Druckfeder (21) abstützt, die den Stift (16) in Ruhestellung in seiner oberen Lage hält, wobei der Stift (16) mit einem abgesetzten Teilstück (22) in einer Bohrung (23) des Einschraubstückes (20) geführt wird.

4. Verfahren nach einem der Ansprüche 1 bis 3, **dadurch gekennzeichnet, dass** die Arretierkugeln (14) hinter einen kugelförmigen Abschnitt (19) am vorderen Ende der Fädelspitze (8) beim Eintauchen derselben in die Bohrung (15) des Stiftes (16) eingreifen.

5. Verfahren nach einem der Ansprüche 1 bis 4, **dadurch gekennzeichnet, dass** der Niederhalter (9) mit dem darin koaxial gelagerten Fädelbolzen (5) auf- und abwärts bewegt wird.

6. Verfahren nach einem der Ansprüche 1 bis 5, **dadurch gekennzeichnet, dass** an dem in dem Niederhalter (9) vorgesehenen Abstreifer (10) die Führungspatrone (6) bei der Aufwärtsbewegung des Fädelbolzens (5) anschlägt und den Fädelbolzen (5) und die Führungspatrone (6) entkoppelt.

7. Verfahren nach Anspruch 6, **dadurch gekennzeichnet, dass** mehrere Teilstücke des Abstreifers (10) jeweils radial unter Federkraft bewegbar sind.

## Claims

1. Method for holding stacked metal sheets, in particular transformer sheets, which are continuously unwound from a storage roll, are subsequently cut to length and shape and are respectively provided with at least one threading hole, wherein after cutting the sheets are stacked in transport direction on pallets, and wherein at least one threading bolt is provided above the sheets, which is configured to be able to move into the threading hole in the respective sheet and then move with this in the direction of the pallet, **characterised in that** before the stacking starts, at least one guide cartridge (6) is inserted into a bore (7) of the respective pallet (4), into which the threading bolt (5) engages on its downward movement with its threading tip (8) provided on the lower end, wherein the threading bolt (5) moves the guide cartridge (6) downwards in the bore (7) of the pallet (4) or in the threading holes (3) of already stacked sheets (2) and on the upward movement the threading bolt (5) is automatically uncoupled [from?] the guide cartridge (6) when the upper edge (11) of the guide cartridge (6) projects beyond the upper side (12) of the last stacked sheet (2).

2. Method according to claim 1, **characterised in that** three locking spheres (14) moveable in radial bores (13) are held on the upper end of the guide cartridge (6) in their outer position in the resting position of a pin (16), which is movable in a coaxial bore (15), wherein the locking spheres (14) project beyond the outer periphery (17) of the guide cartridge (6) and are held on shoulders (18) at the end of the bores (13).

3. Method according to claim 1 or 2, **characterised in that** supported on a screw-in piece (20) screwed in at the lower end of the guide cartridge (6) is a pressure spring (21), which holds the pin (16) in resting position in its upper position, wherein the pin (16) is guided with a stepped section (22) in a bore (23) of the screw-in piece (20).

4. Method according to one of claims 1 to 3, **characterised in that** the locking spheres (14) engage behind a spherical section (19) at the front end of the threading tip (8) when this penetrates into the bore (15) of the pin (16).

5. Method according to one of claims 1 to 4, **characterised in that** the press holder (9) with the threading bolt (5) disposed coaxially therein is moved up and down.

6. Method according to one of claims 1 to 5, **characterised in that** the guide cartridge (6) strikes against the guard (10) provided in the press holder (9) during the upward movement of the threading bolt (5) and uncouples the threading bolt (5) and the guide cartridge (6).

7. Method according to claim 6, **characterised in that** several sections of the guard (10) are respectively radially movable under resilient force.

## Revendications

1. Procédé pour le maintien de tôles empilées, en particulier de tôles de transformateur, qui sont déroulées en continu à partir d'un rouleau de stockage, coupées ensuite à longueur et en forme, et pourvues chacune d'au moins un trou d'insertion, les tôles étant empilées sur des palettes, dans la direction de transport, après la coupe, et au moins un boulon d'insertion étant prévu au-dessus des tôles, lequel est conçu de manière à pouvoir être mû dans le trou d'insertion de chaque tôle, et déplacé ensuite, avec celle-ci, en direction de la palette, **caractérisé en ce qu'**un gabarit de guidage (6) au moins est placé, avant le début de l'empilage, dans un alésage (7) de la palette (4) concernée, dans laquelle le boulon d'insertion (5) s'engage avec sa pointe d'insertion (8) lors du déplacement descendant, le boulon d'insertion (5) déplaçant vers le bas le gabarit de guidage (6) dans l'alésage (7) de la palette (4), respectivement dans les trous d'insertion (3) des tôles (2) déjà empilées, et le boulon d'insertion (5) étant découplé automatiquement lors du mouvement ascendant, quand le bord supérieur (11) du gabarit de guidage (6) est en saillie au-dessus du côté supérieur (12) de la tôle (2) empilée en dernier lieu.

2. Procédé selon la revendication 1, **caractérisé en ce que** trois billes d'arrêt (14), mobiles dans des alésages radiaux (13), sont maintenues dans leur position extérieure, à l'extrémité supérieure du gabarit de guidage (6), en position de repos, par une tige (16) mobile dans un alésage coaxial (15), les billes d'arrêt (14) ressortant du pourtour extérieur (17) du gabarit de guidage (6) et étant maintenues à des épaulements (18), à l'extrémité des alésages (13).

3. Procédé selon revendication 1 ou 2, **caractérisé en ce que,** sur une pièce filetée (20), vissée à l'extrémité inférieure du gabarit de guidage (6), prend appui un ressort de pression (21), qui, en position de repos, maintient la tige (16) dans sa position supérieure, la tige (16) étant guidée dans un alésage (23) de la pièce filetée (20) avec une partie en dépouille (22).

4. Procédé selon l'une des revendications 1 à 3, **caractérisé en ce que** les billes d'arrêt (14) s'engagent derrière une section (19) en forme de boule à l'extrémité avant de la pointe d'insertion (8) lorsque celle-ci pénètre dans l'alésage (15).

5. Procédé selon l'une des revendications 1 à 4, **caractérisé en ce que** le serre-flan (9) est mû vers le haut et vers le bas avec le boulon d'insertion (5) qui est monté dans celui-ci coaxialement.

6. Procédé selon l'une des revendications 1 à 5, **caractérisé en ce que** le gabarit de guidage (6) frappe le racleur (10), prévu dans le serre-flan (9) lors du déplacement ascendant du boulon d'insertion (5) et découple le boulon d'insertion (5) et le gabarit de guidage (6).

7. Procédé selon la revendication 6, **caractérisé en ce que** plusieurs segments du racleur (10) peuvent être déplacés chacun dans la direction radiale en étant soumis à une force élastique.
